# EUROPEAN PATENT SPECIFICATION

(11) **EP 2 998 581 B1**
(45) Date of publication and mention of the grant of the patent: **15.11.2017**
(21) Application number: 14185734.2
(22) Date of filing: 22.09.2014
(51) Int. Cl.: F04B 17/05, F04B 35/00, B60K 25/00, B62D 5/06, B60T 17/02

(54) **Compressor system**
Verdichtersystem
Système de compresseur

(43) Date of publication of application: 23.03.2016
(73) Proprietor: KNORR-BREMSE Systeme für Nutzfahrzeuge GmbH, 80809 München (DE)
(72) Inventor: Krabot, Matyas, 2310 Szigetszentmiklós (HU); Nemeth, Huba, 1116 Budapest (HU); Boka, Gergely, 5000 Szolnok (HU)

(56) References cited:
- EP-A2- 0 978 652
- WO-A2-2007/136168
- DE-A1- 2 732 913
- US-A- 5 573 379
- US-A1- 2011 135 510
- US-A1- 2012 266 701
- US-A1- 2013 343 908

## Description

The present invention relates to a compressor system and, in particular, to a compressor system with a variable air compressor and an auxiliary device driven by the compressor shaft through a clutch.

### Background

Commercial vehicles are generally equipped with both an air compressor and a steering pump. Compressed air is needed for many air consumers as, for example, the brake system, air suspension, transmission control, etc. A piston compressor is one exemplary device typically employed on buses and trucks to generate compressed air for the air systems of these vehicles. On the other hand, hydraulic pressure is required, for example, for steering assistance on vehicles with hydraulic systems of power assisted steering, wherein the hydraulic pressure may be generated using the hydraulic steering pumps.

The air compressor is typically driven by the engine through a gear train or a belt transmission, whereas the steering pump is often driven directly by the compressor shaft (e.g. for packaging reasons).

During vehicle operation, in general, a continuous operation is neither needed for the compressor nor for the steering pump. For example, when all the air reservoirs are filled, no more compressed air is needed. Therefore, conventional compressors include energy saving systems in order to reduce the energy consumption of the compressor during off-load phases.

WO2009/092534 discloses one conventional energy saving system relying on an increase of dead-volume by adding an additional chamber. Although this procedure enables a continuous drive of the steering pump for longer time, the reduction of drive power of the compressor in off-load phases is only moderate. DE102008003957 suggests to save energy by decoupling the compressor drive via a clutch. However, as a result, the drive of the steering pump is not possible anymore and the compressor cannot be switched off independently from the steering pump operation. Similar arrangements are likewise disclosed in US 2011/0135510 A1 and DE 2732913 A1.

To further optimize the energy efficiency of the air compressor US2013/0343908 A1 suggests parallel or concentric transmission arrangements, e.g. for an auxiliary drive system, in order to independently switch on and off of the components. However, this solution is expensive and requires more installation space.

Therefore, there is a demand for a more flexible system for providing compressed air which is able to dynamically adjust the compression rate to a changing demand, thereby further reducing the energy consumption.

### Summary of the Invention

The present invention solves the above-mentioned problem by providing a compressor system according to claim 1.

In particular, the present invention relates to a compressor system for a vehicle with a drive unit. The compressor system comprises: a variable air compressor, a control unit, an auxiliary device, and a controllable clutch. The variable air compressor includes a compressor shaft to be driven by the drive unit and is configured to compress a variable volume of air within a predetermined time period (i.e. has a variable throughput or operates with a variable generation rate of compressed air). The control unit is configured to control the variable air compressor to change the variable volume of air. The controllable clutch is configured to decouple the compressor shaft from the auxiliary device. The compressor shaft extends through the variable air compressor to couple to the controllable clutch to drive the auxiliary device by the compressor shaft, the controllable clutch being installed between the variable air compressor and the auxiliary device and being capable of detaching the auxiliary device from a driveline.

The dependent claims refer to specifically advantageous realizations of the subject matters of the independent claim.

The present invention solves the above-mentioned problem by coupling a variable air compressor with an auxiliary device through a controllable clutch. Thus, the air compressor as well as the auxiliary device can be controlled by the control unit to adjust their respective compression rates in response to a current demand (e.g. of compressed air). It should be understood that the controllable clutch covers all possible clutches that can be engaged or disengaged in response to a respective signal which may be an electric, pneumatic, or hydraulic signal. Similarly, a variable air compressor refers to any type of compressor that is able to adjust a throughput of compressed air based on a control signal (e.g. an electrical, a pneumatic, or a hydraulic signal).

In another compressor system, the compressor shaft may extend through the variable air compressor to couple directly to the controllable clutch. By coupling the auxiliary device directly on the compressor shaft, a compact design combined with a high reliability is made possible.

However, if the auxiliary device (for example a further pump) is operated with a different rotational speed, it is of advantage to have an intermediate transmission arranged between the variable air compressor and the auxiliary device to adjust the rotational speed accordingly.

Therefore, in yet another embodiment the compressor system comprises optionally an intermediate transmission arranged between the controllable clutch and the auxiliary device or between the variable air compressor and the controllable clutch. The intermediate transmission may be configured to change a rotational speed from the first rotational speed to the second rotational speed so that the compressor shaft is driven with a first rotational speed and the auxiliary device is driven with a second rotational speed being different from the first rotational speed. The first and second rotational speeds may define optimal rotational speeds for the components and may ensure high efficiency without imposing unneeded stress on the components. Thus, the intermediate transmission provides additional advantages.

It is further of advantage to have a transmission between the drive unit and the compressor shaft of the variable air compressor so that the driving speed can be adapted to an optimal value for the variable air compressor.

Therefore, in yet another embodiment the compressor system may comprise a transmission arranged between the drive unit and the compressor shaft of the variable air compressor. The transmission may be configured to change a rotational speed received from the drive unit to a rotational speed used to drive the variable air compressor.

In yet another embodiment the intermediate transmission and/or the transmission may provide a gearing such that the compressor shaft rotates with a different rotational speed than a driving shaft of the auxiliary device and/or of the drive unit.

In yet another embodiment the compressor system may further comprise an air processing unit connected to the variable air compressor such that the compressed air generated by the variable air compressor is transmitted to the air processing unit and is processed by the air processing unit. The processing may relate to any modification of the air, which may include filtering, drying, cooling, or any other process.

In yet another embodiment the compressor system may further comprise an air tank (or more air tanks) configured to store the pressured air generated by the variable air compressor and processed by the air processing unit. Therefore, embodiments include a fluid connection from the variable air compressor via the air processing unit to the air tank. The air tank stores the compressed air for later usage by the various air consumers. If the air tank is completely filled with compressed air and cannot store any addition air, a feedback is desired.

Therefore, in yet another embodiment the compressor system may further comprise a sensor connection connecting the control unit with the air processing unit. The sensor connection may, for example, being used to transmit a feedback signal (one or more sensor signals) from the air processing unit to the control unit, so that the control unit can adjust the controlling based on the received information. These sensor signals may be indicative of the amount of air received by the air processing unit and/or stored in the tank, so that the control unit can accelerate or slow down the variable air compressor in case compressed air is needed or sufficient compressed air is available.

In yet another embodiment the control unit is included in the air processing unit (e.g. accommodated in a common case). This enables a compact design and avoids additional wiring (e.g. for signal lines) thereby increasing also the reliability.

In yet another embodiment the variable air compressor may comprise a variable stroke piston compressor and/or the auxiliary device includes a steering pump to support a steering of the vehicle. The variable stroke piston compressor is advantageous in that it can be engaged very quickly and increases a compression rate or throughput within a short time period so that a suddenly changing demand can be met.

In yet another embodiment the control unit may further be configured to control the controllable clutch and/or to control a stroke of the variable stroke piston compressor. If the control unit is able to control the variable air compressor as well as the controllable clutch, there is no need for an additional control unit and it is possible to coordinate both devices so that if one device requires an increased priority, this one device can be adjusted at first.

The present invention relates also to a vehicle with a compressor system as described before. The vehicle may comprise a drive unit and a transmission is optionally provided between the drive unit and the compressor system.

### Brief Description of the Drawings

Various embodiments of the present invention will be described in the following by way of examples only and with respect to the accompanying drawings, in which:
- Fig. 1: depicts a compressor system according to an embodiment of the present invention;
- Fig. 2: depicts further details of an exemplary compressor system according to a further embodiment of the present invention;
- Fig. 3: depicts another embodiment of an exemplary compressor system;
- Fig. 4: depicts yet another embodiment of an exemplary compressor system;
- Fig. 5: depicts yet another embodiment of an exemplary compressor system; and
- Fig. 6: depicts yet another embodiment of an exemplary compressor system.

### Detailed Description

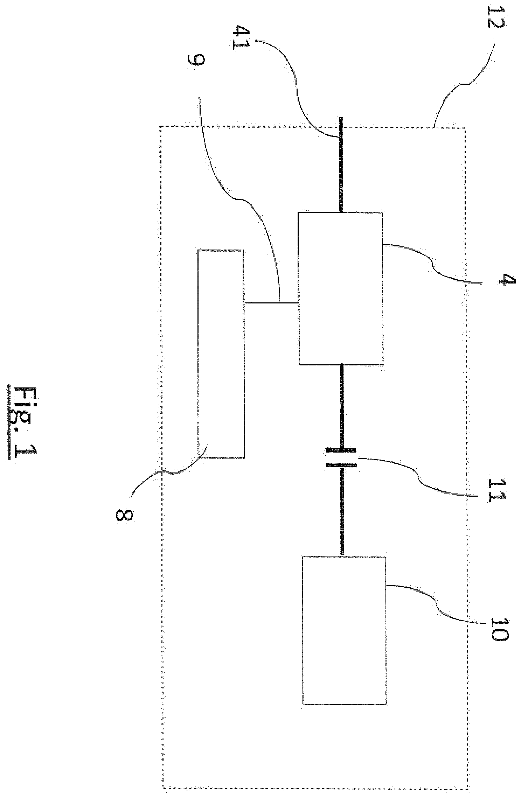

Fig. 1 depicts a compressor system with a variable air compressor 4, a control unit 8, an auxiliary device 10, and a controllable clutch 11. The variable air compressor 4 includes a compressor shaft 41 which extends outward of the variable air compressor 4 to be coupled by a drive unit 2 of a vehicle and the controllable clutch. The variable air compressor 4 is configured to compress a variable volume of air per time unit (within a predetermined time period). The control unit 8 is configured to control the variable air compressor 4 to change the variable volume of air. The controllable clutch 11 is configured to controllable decouple the auxiliary device 10 from the compressor shaft 41.

The auxiliary device may be any device driven by a rotating shaft (e.g. a hydraulic steering pump).

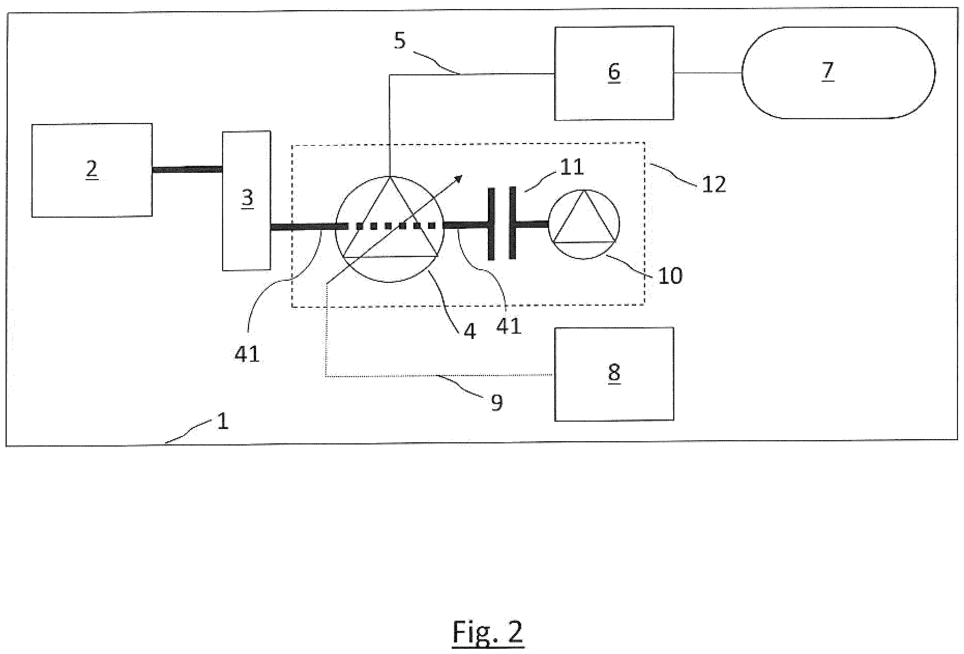

Fig. 2 depicts a (commercial) vehicle air system with a compressor module 12, a drive unit 2, a transmission 3, an air processing unit 6, an air tank 7 (or multiple tanks) and a control unit 8. The compressor module 12 comprises in this embodiment a variable stroke compressor 4 as variable air compressor, which couples to the auxiliary device 10 via the controllable clutch 11. The auxiliary device 10 is, for example, a steering pump. The controllable clutch 11 couples directly on the compressor shaft 41 of the variable stroke compressor 4.

Between the compressor shaft 41 and the drive unit 2, an optional transmission 3 is arranged to adjust a rotational speed of the drive unit 2 to a desired rotational speed of the compressor shaft 41 of the variable stroke compressor 4. Moreover, the control unit 8 may be configured to control the stroke of the variable stroke compressor 4 via a control line 9. The variable stroke compressor 4 is connected to the air compressing unit 6 via an air connection 5, and the air tank 7 is connected to the air processing unit 6.

In operation, the drive unit 2 drives the compressor shaft 41 via the transmission 3. Depending on the selected stroke of the variable stroke compressor 4, the variable stroke compressor 4 generates compressed air which is pumped through the air processing unit 6 via the air connection 5. After processing the compressed air in the air processing unit 6, the compressed air is stored in the air tank 7. The air processing done by the air processing unit 6 involves, for example, an adjustment of the humidity of the air, a filtering or other processes to modify a property of the compressed air.

In addition, the controllable clutch 11 couples to the compressor shaft 41 so that the rotating compressor shaft 41 will also drive the controllable clutch 11. If the clutch 11 is engaged, the rotating compressor shaft 41 will drive the auxiliary device 10, which in turn may generate a needed pressure for steering.

The depicted vehicle air system of Fig. 2 can, for example, be arranged within a commercial vehicle 1, wherein the drive unit 2 may preferably be an internal combustion engine, but may also be any other kind of drive unit, e.g. an electric drive. The transmission 3 may be a direct drive, gear train, belt drive or any suitable arrangement.

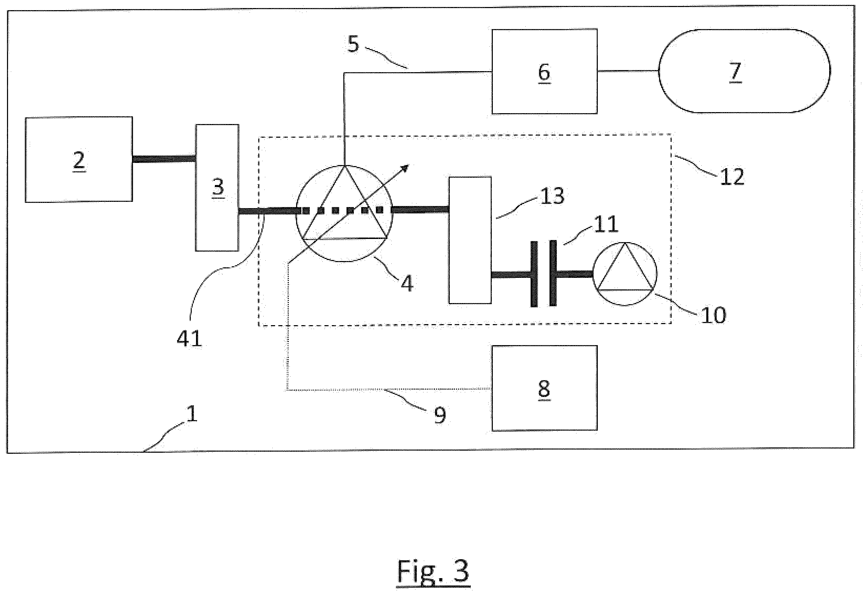

Fig. 3 depicts a further vehicle air system according to another embodiment of the present invention and, in particular, a utility vehicle air system with variable stroke piston compressor 4 and auxiliary device 10 driven by the compressor shaft 41 through an intermediate transmission 13 and a controllable clutch 11. The components as shown in Fig. 3 have the same functions as the components depicted in Fig. 2. Fig. 3 differs from Fig. 2 only in that the intermediate transmission 13 is arranged between the variable stroke compressor 4 and the controllable clutch 11. All other components are the same as shown in Fig. 2 and a repetition of the description can be omitted here.

The intermediate transmission 13 provides another adaptation of the rotational speed of the compressor shaft 41 to the rotational speed of the controllable clutch 11 and subsequently of the auxiliary device 10. Therefore, it is possible that the auxiliary device 10 operates with a different rotational speed when compared to the variable stroke compressor 4.

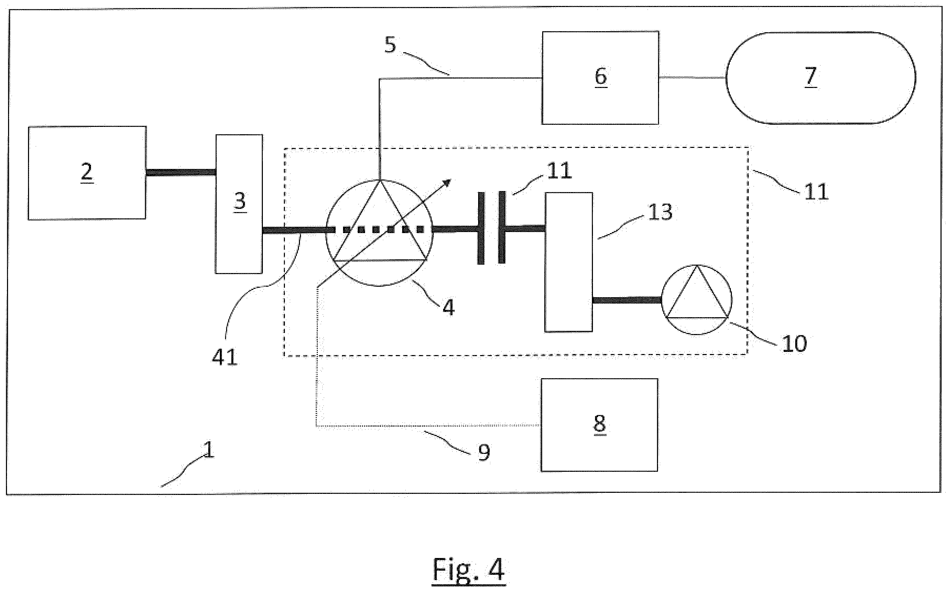

Fig. 4 depicts another vehicle air system according to a further embodiment and, in particular, a utility vehicle air system again with the variable stroke piston compressor 4 and the auxiliary device 10 driven by the compressor shaft 41 through the controllable clutch 11 and the intermediate transmission 13. The embodiment shown in Fig. 4 differs from the embodiment of Fig. 3 only in that the intermediate transmission 13 is arranged between the controllable clutch 11 and the auxiliary device 10. Again, the intermediate transmission 13 is configured to adjust a rotational speed of the controllable clutch 11 to the rotational speed with which the auxiliary device 10 is operated.

Depending on the particular transmissions the rotational speeds, with which the controllable clutch 11 is driven, may differ in the embodiments of Fig. 3 or Fig. 4. Therefore, by arranging the intermediate transmission 13 either before the controllable clutch 11 or behind the controllable clutch 11 along the driving train, it becomes possible to set an operation speed of the controllable clutch 11 in accordance with the particular demands.

Therefore, driving the auxiliary device 10 by the compressor 4 through a clutch 11 and an intermediate transmission 13 is particular useful, if, e.g., the speed range of the compressor shaft 41 is not suitable for the auxiliary device 10, or if there is a need for an axis offset between the compressor 4 and the auxiliary device 10. Such offset may be needed as consequence of packaging issues. The intermediate transmission 13 might have a fixed gearing ratio of lower than 1, equal to 1 or greater than 1, or might be constructed as a variable speed transmission. Furthermore, the intermediate transmission 13 might have a coaxial input and output shafts or have an axis offset between the input and output shafts.

In general, the position of the intermediate transmission 13 may depend on aspects as, for example, the design and the installation point of view (e.g. regarding the desired clutch torque capacity).

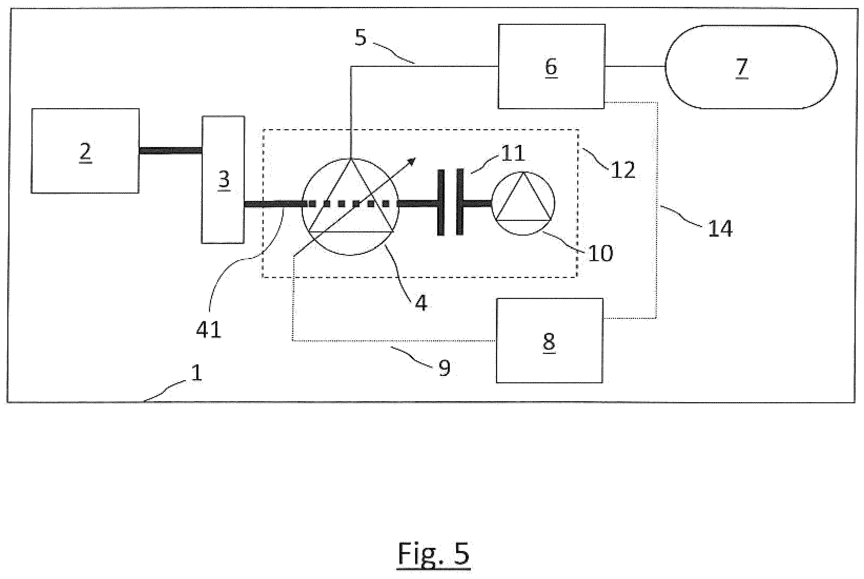

Fig. 5 depicts yet another vehicle air system according to a further embodiment and shows again a utility vehicle air system with variable stroke piston compressor 4, but now comprises a sensor connection 14 between the air processing unit 6 and the stroke control unit 8 and an auxiliary device 10 is driven again directly by the compressor shaft 41.

When comparing the embodiment of Fig. 5 with the embodiment as shown in Fig. 2, the sensor connection 14 provides the advantage that the control unit 8 can control the variable stroke compressor 4 dependent on the quality of the compressed air being received by the air processing unit 6. Moreover, the sensor connection 14 can be used in order to provide a feedback (e.g. as a feedback signal) from the air processing unit 6 with respect, for example, to the already achieved pressure of the compressed air in the tank 7 so that the control unit 8 can adjust the variable stroke compressor 4 dependent on the sensor signal (feedback signal) provided by the air processing unit 6. Therefore, the embodiment of Fig. 5 allows a feedback, thereby providing a close control loop which enables a quick adjustment of the generation rate of compressed air by the compressor module 12.

In further embodiment the sensor connection 14 may also be formed in the embodiments shown in Figs. 3 and 4 (including the intermediate transmission 13). However, whether an intermediate transmission 13 is included or not, the air processing unit 6 and the stroke control unit 8 may be coupled to each other by the sensor connection 14 so that the stroke control unit 8 may receive the feedback or the control signal from the air processing unit 6 or vice-versa.

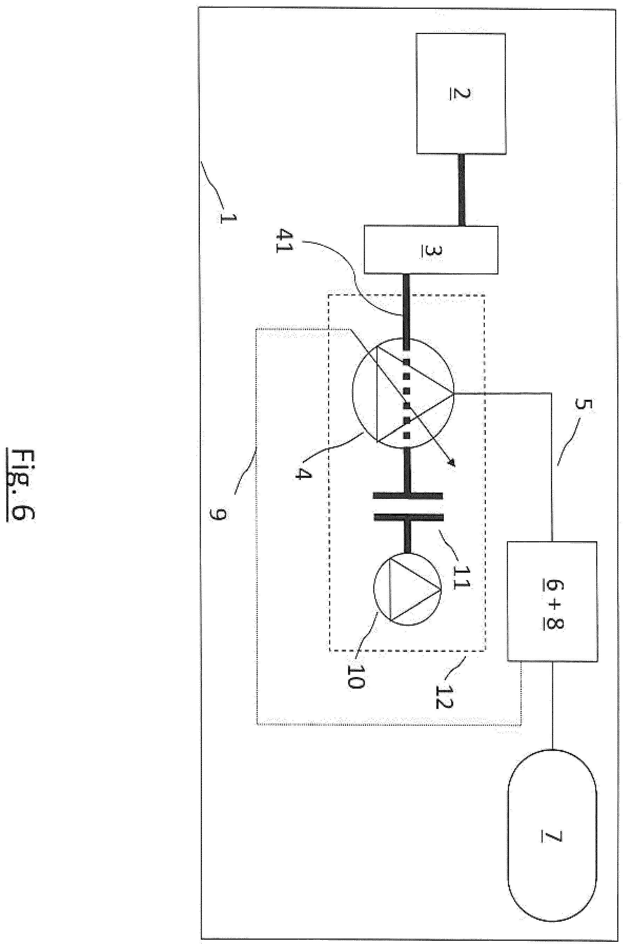

Fig. 6 depicts a further embodiment, wherein the control unit 8 and the air processing unit 6 are combined within a single component and, in particular, a utility vehicle air system again with a variable stroke piston compressor 4, but which is now controlled by the air processing unit 6. The auxiliary device 10 is again driven directly by the compressor shaft 41.

This provides similar advantages as the embodiment of Fig. 5. For example, the controlling of the variable stroke compressor 4 can be made dependent on the output of the compressed air received via the air connection pipe 5 by the air processing unit 6. Again, also this embodiment can be combined with the intermediate transmission shown in Figs. 3 and 4, but whether an intermediate transmission 13 is included or not, if the air processing unit 6 has a control unit, this control unit might be used as the stroke control unit 8 for the variable stroke compressor 4. Therefore, the air processing unit 6 and the stroke control unit 8 can be integrated or may be realized as one integrated unit.

Again, the embodiment of Fig. 6 implements a closed control loop, wherein the feedback is implemented by the control line 9 to transmit at least one signal between the air processing unit 6 and the variable air compressor 4. The variable air compressor 4 may likewise modify its throughput based the transmitted signal from the air processing unit 6.

Major aspects of the present invention may be summarized as follows.

According to the present invention a variable stroke air compressor 4 is combined with an auxiliary device 10 (e.g. steering pump) driven directly by the compressor 4 and being detachable from the compressor shaft 41 via a clutch 11.

The compressor (variable air compressor 4) delivers compressed air to the air processing unit 6 through the air connection 5. The air processing unit 6 processes the compressed air received from the compressor 4, e.g. filters the oil content and humidity, adjust the pressure levels according to the different pressure circuits, etc. The exact scope of functionality depends on the actual application; all those functions are included and symbolized by the element 6. The processed air is transmitted to the air reservoirs (tanks 7) of the vehicle. The number and pressure level of the air reservoirs vary according to the vehicle application. The variable stroke compressor 4 is connected to a stroke control unit 8 through a connection (the control line 9). The stroke control unit (control unit 8) controls and/or regulates the stroke of the variable stroke compressor 4. The control signal transmitted between the control unit 8 and the compressor 4 might include e.g. a mechanical, an electrical, a pneumatic or a hydraulic signal.

The variable stroke compressor 4 can be of any kind enabling the continuous drive of the auxiliary device 10 (e.g. a hydraulic pump) directly by the compressor shaft 41 going through the compressor 4. There is a controllable clutch 11 installed between the compressor 4 and the auxiliary drive 10 is capable of detaching the auxiliary device 10 from the driveline.

For example, the stroke of at least one compressor piston 4 may be controlled between a maximum and a minimum value, while the compressor shaft 41 is capable of driving e.g. a steering pump independently from the actual compressor piston stroke. As a result, the variable stroke piston compressor 4 realizes an energy saving system by stroke variation.

The variable stroke compressor 4 may be constructed as a multi-cylinder piston compressor, with variable stroke crank drive for at least one of the pistons. Depending on the compressor design, applying the variable stroke crank drive only for dedicated pistons may enable the reduction of the power consumption in energy saving mode to the desired level, and has the benefit that the remaining crank drives might be similar to a conventional crankshaft - conrod - piston assembly known in the common engineering knowledge, produced in a cost-effective way. For example, two cylinders can be used, among which one is driven through a fixed stroke crank mechanism, the other one through a variable stroke crank mechanism.

Embodiments are advantageous in that the layout enables energy saving of the air compressor via stroke variation without effecting the auxiliary device. In addition, the energy saving of the auxiliary device has no effect on the compressor energy saving. The compressor and the auxiliary device may be switched to off-load, respectively on-load phase independently from each other, thereby optimizing the energy efficiency of the compressor-steering pump system.

The direct drive of the auxiliary device 10 through the compressor shaft 41 enables a more compact packaging as compared to parallel or hollow shaft arrangements.

The invention is primarily considered to be advantageous for a steering pump as the auxiliary device 10, but it is also possible to install another device, e.g. an A/C pump on the compressor.

Further advantageous embodiments of the present invention relate to an air system for commercial vehicles 1 including a variable stroke piston compressor 4 controlled and/or regulated by a stroke control unit 8, driven by a drive unit 2 through a transmission 3 delivering compressed air through an air processing unit 6 to the air tanks 7. The air system is characterized in that the compressor shaft 41 drives an auxiliary device 10 via a controllable clutch 11 capable of decoupling the auxiliary device 10 from the compressor shaft 41.

According to yet another embodiment the air system is characterized in that besides the clutch 11, there is also an intermediate transmission 13 included between the compressor shaft 41 and the auxiliary device 10.

According to yet another embodiment the air system is further characterized in that the compressor stroke control unit 8 and the air processing unit 6 are connected.

According to yet another embodiment the air system is further characterized in that the compressor stroke control unit 8 is integrated in the air processing unit 6.

The description and drawings merely illustrate the principles of the disclosure. It will thus be appreciated that those skilled in the art will be able to devise various arrangements that, although not explicitly described or shown herein, embody the principles of the disclosure.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

### List of reference signs

- 1: vehicle
- 2: drive unit
- 3: transmission
- 4: variable air compressor
- 5: air connection
- 6: air processing unit
- 7: air tank
- 8: control unit
- 9: control line
- 10: auxiliary device
- 11: clutch
- 12: compressor module
- 13: intermediate transmission
- 14: sensor connection
- 41: compressor shaft

## Claims

1. A compressor system for a vehicle (1) with a drive unit (2), the compressor system comprising:
a variable air compressor (4) with a compressor shaft (41) to be driven by the drive unit (2), the variable air compressor (4) is configured to compress a variable volume of air within a time period;
a control unit (8) configured to control the variable air compressor (4) to change the variable volume of air;
an auxiliary device (10); and
a controllable clutch (11) configured to decouple the compressor shaft (41) from the auxiliary device (10),
**characterized in that**
the compressor shaft (41) extends through the variable air compressor (4) to couple to the controllable clutch (11) to drive the auxiliary device (10) by the compressor shaft (41), the controllable clutch (11) being installed between the variable air compressor (4) and the auxiliary device (10) and being capable of detaching the auxiliary device (10) from a driveline.

2. The compressor system according to claim 1, further comprising an air processing unit (6) connected to the variable air compressor (4) such that the compressed air generated by the variable air compressor (4) is transmitted to the air processing unit (6) and is processed by the air processing unit (6).

3. The compressor system according to claim 2, further comprising an air tank (7) configured to store pressured air generated by the variable air compressor (4) and processed by the air processing unit (6).

4. The compressor system according to claim 2 or claim 3, further comprising a sensor connection (14) connecting the control unit (8) with the air processing unit (6) to provide a feedback signal to the control unit (8), and the control unit (8) is configured to control the variable air compressor (4) based on the feedback signal.

5. The compressor system according to claim 2 or claim 3, wherein the control unit (8) is included in the air processing unit (6).

6. The compressor system according to one of the preceding claims, the compressor system further comprising an intermediate transmission (13) arranged between the controllable clutch (11) and the auxiliary device (10) or between the variable air compressor (4) and the controllable clutch (11), wherein the intermediate transmission (13) is configured to change a rotational speed of the compressor shaft (41) to a rotational speed used for driving the auxiliary device (10).

7. The compressor system according to one of the preceding claims, further comprising a transmission (3) arranged between the drive unit (2) and the compressor shaft (41) of the variable air compressor (4), the transmission (3) is configured to change a rotational speed received from the drive unit (2) to a rotational speed used to drive the variable air compressor (4).

8. The compressor system according to claim 6 or claim 7, wherein the intermediate transmission (13) and/or the transmission (3) provide a gearing such that the compressor shaft (41) rotates with a different rotational speed than a driving shaft of the auxiliary device (10) or than a driving shaft of the drive unit (2).

9. The compressor system according to one of the preceding claims, wherein the variable air compressor (4) comprises a variable stroke system compressor (4) and/or the auxiliary device (10) includes a steering pump to support a steering of the vehicle.

10. The compressor system according to one of the preceding claims, wherein the control unit (8) is further configured to control the controllable clutch (11) and/or to control a stroke of the variable stroke piston compressor (4).

11. A vehicle (1) with a compressor system according to one of the preceding claims.

## Patentansprüche

1. Verdichtersystem für ein Fahrzeug (1) mit einer Antriebseinheit (2), wobei das Verdichtersystem umfasst:
einen variablen Luftverdichter (4) mit einer von der Antriebseinheit (2) anzutreibenden Verdichterwelle (41), wobei der variable Luftverdichter (4) so ausgelegt ist, dass er innerhalb eines Zeitraums ein variables Luftvolumen verdichtet;
eine Regelungseinheit (8) ausgelegt zum Regeln des variablen Luftverdichters (4) zum Ändern des variablen Luftvolumens;
eine Zusatzvorrichtung (10); und
eine regelbare Kupplung (11) ausgelegt zum Auskuppeln der Verdichterwelle (41) aus der Zusatzvorrichtung (10),
**dadurch gekennzeichnet, dass**
die Verdichterwelle (41) sich durch den variablen Luftverdichter (4) erstreckt, um die regelbare Kupplung (11) zu kuppeln und die Zusatzvorrichtung (10) durch die Verdichterwelle (41) anzutreiben, wobei die regelbare Kupplung (11) zwischen dem variablen Luftverdichter (4) und der Zusatzvorrichtung (10) eingebaut ist und in der Lage ist, die Zusatzvorrichtung (10) von einem Antriebsstrang zu trennen.

2. Verdichtersystem nach Anspruch 1, ferner umfassend: eine Luftaufbereitungseinheit (6), die mit dem variablen Luftverdichter (4) so verbunden ist, dass die vom variablen Luftverdichter (4) erzeugte Druckluft an die Luftaufbereitungseinheit (6) übermittelt und von der Luftaufbereitungseinheit (6) aufbereitet wird.

3. Verdichtersystem nach Anspruch 2, ferner umfassend: einen Druckluftbehälter (7) ausgelegt zum Speichern der vom variablen Luftverdichter (4) erzeugten und von der Luftaufbereitungseinheit (6) aufbereiteten Druckluft.

4. Verdichtersystem nach Anspruch 2 oder Anspruch 3, ferner umfassend: einen Sensoranschluss (14), der die Regelungseinheit (8) mit der Luftaufbereitungseinheit (6) verbindet, um ein Rückkopplungssignal an die Regelungseinheit (8) zu liefern, und wobei die Regelungseinheit (8) so ausgelegt ist, dass sie den variablen Luftverdichter (4) anhand des Rückkopplungssignals regelt.

5. Verdichtersystem nach Anspruch 2 oder Anspruch 3, wobei die Regelungseinheit (8) in der Luftaufbereitungseinheit (6) enthalten ist.

6. Verdichtersystem nach einem der vorhergehenden Ansprüche, wobei das Verdichtersystem ferner umfasst: ein Zwischengetriebe (13), das zwischen der regelbaren Kupplung (11) und der Zusatzvorrichtung (10) oder zwischen dem variablen Luftverdichter (4) und der regelbaren Kupplung (11) angeordnet ist, wobei das Zwischengetriebe (13) so ausgelegt ist, dass es eine Drehzahl der Verdichterwelle (41) auf eine zum Antreiben der Zusatzvorrichtung (10) verwendete Drehzahl ändert.

7. Verdichtersystem nach einem der vorhergehenden Ansprüche, ferner umfassend: ein Getriebe (3), das zwischen der Antriebseinheit (2) und der Verdichterwelle (41) des variablen Luftverdichters (4) angeordnet ist, wobei das Getriebe (3) so ausgelegt ist, dass es eine von der Antriebseinheit (2) kommende Drehzahl zu einer zum Antreiben des variablen Luftverdichters (4) verwendeten Drehzahl ändert.

8. Verdichtersystem nach Anspruch 6 oder Anspruch 7, wobei das Zwischengetriebe (13) und/oder das Getriebe (3) eine Verzahnung dergestalt bereitstellen, dass sich die Verdichterwelle (41) mit einer anderen Drehzahl dreht als eine Antriebswelle der Zusatzvorrichtung (10) oder als eine Antriebswelle der Antriebseinheit (2).

9. Verdichtersystem nach einem der vorhergehenden Ansprüche, wobei der variable Luftverdichter (4) einen hubvariablen Kolbenverdichter (4) umfasst und/oder die Zusatzvorrichtung (10) eine Lenkpumpe aufweist, um das Lenken des Fahrzeugs zu unterstützen.

10. Verdichtersystem nach einem der vorhergehenden Ansprüche, wobei die Regelungseinheit (8) ferner ausgelegt ist zum Regeln der regelbaren Kupplung (11) und/oder zum Regeln eines Hubs des hubvariablen Kolbenverdichters (4).

11. Fahrzeug (1) mit einem Verdichtersystem nach einem der vorhergehenden Ansprüche.

## Revendications

1. Système de compresseur pour un véhicule (1) ayant une unité (2) d'entraînement, le système de compresseur comprenant :
un compresseur (4) d'air variable ayant un arbre (41) de compresseur à entraîner par l'unité (2) d'entraînement, le compresseur (4) d'air variable étant configuré pour comprimer un volume variable d'air en une certaine durée ;
une unité (8) de commande configurée pour commander le compresseur (4) d'air variable afin de changer le volume variable d'air ;
un dispositif (10) auxiliaire et
un embrayage (11), qui peut être commandé et qui est configuré pour découpler l'arbre (41) du compresseur du dispositif (10) auxiliaire,
**caractérisé en ce que**
l'arbre (41) du compresseur s'étend dans le compresseur (4) d'air variable pour se coupler à l'embrayage (11), qui peut être commandé, pour entraîner le dispositif (10) auxiliaire par l'arbre (41) du compresseur, l'embrayage (11), qui peut être commandé, étant monté entre le compresseur (4) d'air variable et le dispositif (10) auxiliaire et étant apte à détacher le dispositif (10) auxiliaire d'une transmission.

2. Système de compresseur suivant la revendication 1, comprenant, en outre, une unité (6) de traitement de l'air reliée au compresseur (4) d'air variable, de manière à ce que l'air comprimé créé par le compresseur (4) d'air variable soit transmis à l'unité (6) de traitement d'air et soit traité par l'unité 6) de traitement d'air.

3. Système de compresseur suivant la revendication 2, comprenant, en outre, un réservoir (7) d'air configuré pour emmagasiner de l'air sous pression créé par le compresseur (4) d'air variable et traité par l'unité (6) de traitement d'air.

4. Système de compresseur suivant la revendication 2 ou la revendication 3, comprenant, en outre, une connexion (14) de capteur reliant l'unité (8) de commande à l'unité (6) de traitement d'air pour fournir un signal de réaction à l'unité (8) de commande et l'unité (8) de commande est configurée pour commander le compresseur (4) d'air variable sur la base du signal de réaction.

5. Système de compresseur suivant la revendication 2 ou la revendication 3, dans lequel l'unité (8) de commande est incluse dans l'unité (6) de traitement d'air.

6. Système de compresseur suivant l'une des revendications précédentes, le système de compresseur comprenant, en outre, une transmission (13) intermédiaire disposée entre l'embrayage (11) pouvant être commandé et le dispositif (10) auxiliaire ou entre le compresseur (4) d'air variable et l'embrayage (11) pouvant être commandé, la transmission (13) intermédiaire étant configurée pour modifier une vitesse de rotation de l'arbre (41) du compresseur en une vitesse de rotation utilisée pour entraîner le dispositif (10) auxiliaire.

7. Système de compresseur suivant l'une des revendications précédentes, comprenant, en outre, une transmission (3) disposée entre l'unité (2) d'entraînement et l'arbre (41) du compresseur (4) d'air variable, la transmission (3) étant configurée pour modifier une vitesse de rotation reçue de l'unité (2) d'entraînement en une vitesse de rotation utilisée pour entraîner le compresseur (4) d'air variable.

8. Système de compresseur suivant la revendication 6 ou la revendication 7, dans lequel la transmission (13) intermédiaire et/ou la transmission (3) donne un ensemble d'engrenage tel que l'arbre (41) du compresseur tourne à une vitesse de rotation différente de celle d'un arbre d'entraînement du dispositif (10) auxiliaire ou de celle d'un arbre d'entraînement de l'unité (2) d'entraînement.

9. Système de compresseur suivant l'une des revendications précédentes, dans lequel le compresseur (4) d'air variable comprend un compresseur (4) de système à course variable et le dispositif (10) auxiliaire comprend une pompe de direction pour faciliter un pilotage du véhicule.

10. Système de compresseur suivant l'une des revendications précédentes, dans lequel l'unité (8) de commande est configurée, en outre, pour commander l'embrayage (11), qui peut être commandé, et/ou pour régler une course du compresseur (4) à piston à course variable.

11. Véhicule (1) ayant un système de compresseur suivant l'une des revendications précédentes.
